# FASCICULE DE BREVET EUROPEEN

(11) **EP 2 031 725 B1**
(45) Date de publication et mention de la délivrance du brevet: **25.02.2015**
(21) Numéro de dépôt: 08290798.1
(22) Date de dépôt: 25.08.2008
(51) Int. Cl.: H02H 7/04, H02H 5/08

(54) **Dispositif de protection contre des effets de défauts d'isolement dans un appareil électrique polyphasé alimenté par un réseau électrique**
Schutzvorrichtung gegen die Effekte von Isolationsfehlern in einem mehrphasigen Elektrogerät, das über ein Stromnetz angeschlossen ist
Method of protecting against the effects of insulation faults in a multiple-phase electrical appliance supplied by the electric mains

(30) Priorité: 03.09.2007 FR 0706155
(43) Date de publication de la demande: 04.03.2009
(73) Titulaire: TRANSFIX, 83130 La Garde (FR)
(72) Inventeur: Faltermeier, Jean-Francis, 83210 Sollies Toucas (FR)
(74) Mandataire: Novagraaf Technologies

(56) Documents cités:
- EP-A- 1 102 379
- EP-A- 1 122 848
- EP-A- 1 806 817

## Description

L'invention concerne un dispositif de protection contre des effets de défauts d'isolement dans un appareil électrique, destiné à être immergé dans un liquide diélectrique contenu dans une cuve reliée à la terre et branché en série à un réseau électrique d'alimentation.

L'invention s'applique plus particulièrement à des transformateurs électriques de distribution destinés aux réseaux triphasés moyenne tension.

Il est connu des documents n° EP1122848 et EP0817346, un dispositif de protection contre des effets dus aux défauts d'isolement dans un transformateur, comportant au moins deux fusibles à percuteur montés chacun sur une phase, un système de déconnexion triphasé, ainsi qu'un moyen de détection des éventuels courants s'écoulant entre la phase en défaut et la terre.

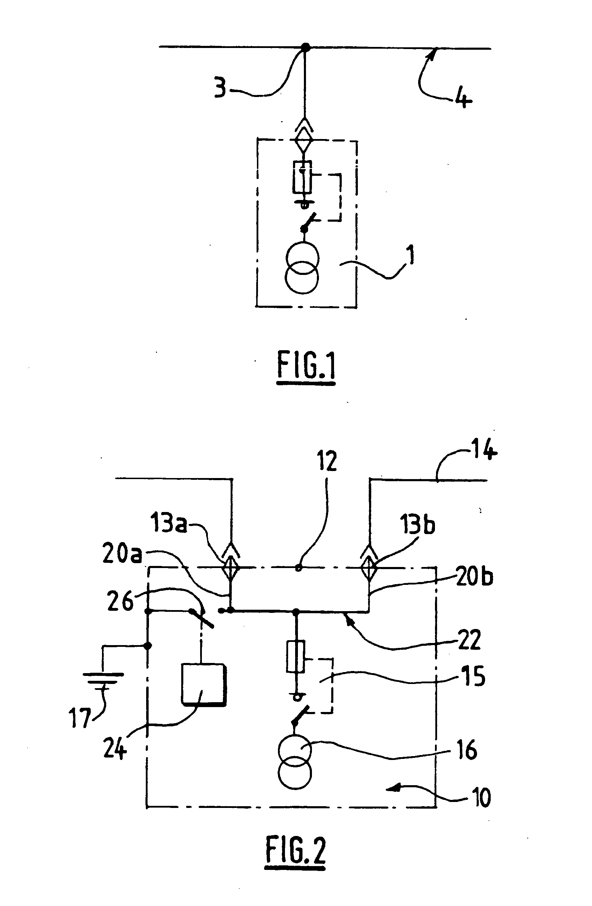

Conformément à la représentation schématique de la figure 1, les appareils électriques, et plus particulièrement les transformateurs 1, équipés de tels dispositifs de protection sont généralement montés en dérivation sur le réseau électrique d'alimentation 4. Mais la réalisation de ce raccordement 3 par dérivation est complexe puisqu'il nécessite d'effectuer un piquage sur le câble du réseau 4. Ce piquage, généralement réalisé avec une boîte de dérivation, est nécessairement monté sur site et n'est pas démontable *a posteriori.*

Il peut donc s'avérer avantageux d'insérer l'appareil électrique directement dans la boucle formée par le réseau d'alimentation au moyen d'un raccordement en série. Ce raccordement peut ainsi être effectué plus simplement, par le biais, pour chaque phase de l'appareil, de deux traversées électriques dont l'extrémité est munie de broches de raccordement.

L'avantage est double. Tout d'abord, cela permet d'obtenir une solution de raccordement plus simple à mettre en oeuvre. D'autre part, cela permet d'extraire facilement l'appareil électrique du réseau. Cette solution est d'autant plus intéressante que ce type de raccordement en série est typique des réseaux de distribution publique.

Toutefois, la mise en place d'un tel raccordement en série peut provoquer de nouveaux défauts d'isolement, notamment via une liaison électrique reliant les deux traversées de raccordement de l'appareil. Par exemple, un arc électrique peut apparaître, soit du fait d'une isolation défaillante, soit du fait d'une surtension transitoire propagée dans le réseau.

Or, les dispositifs de protection évoqués précédemment n'agissent que pour les défauts d'isolement situés au niveau de la partie active de l'appareil. En conditions normales, les circuits électriques à protéger ne voient que le courant de service du transformateur soit, au plus quelques dizaines d'ampères. L'utilisation de fusibles, dont la sensibilité permet d'intervenir dès l'apparition de courants de défauts de valeur allant de cinq à dix fois le courant de service, est donc suffisante.

En revanche, l'appareil électrique ainsi relié au réseau de distribution n'est plus soumis uniquement au courant de service de l'appareil électrique, mais également au courant transité par le réseau qui est de plusieurs centaines d'ampères. Une protection de type fusible n'est donc plus envisageable.

Un autre dispositif de protection pour transformateurs électriques immergés est divulgué par le document EP 1 806 817.

La réalisation d'un dispositif de protection pour un appareil raccordé en série au réseau électrique d'alimentation pourrait donc avantageusement comporter, en sus des solutions déjà évoquées, une solution permettant de protéger l'appareil des effets résultant d'un défaut d'isolement. Le dispositif de protection pourrait notamment protéger l'appareil électrique contre l'apparition d'un arc électrique entre deux ou plusieurs phases, c'est-à-dire situé entre les différentes liaisons électriques reliant les deux traversées de raccordement pour chaque phase, ou encore l'apparition d'un arc électrique entre l'une des liaisons électriques et la masse de l'appareil.

Pour ce faire, la présente invention propose d'établir pour chaque phase de l'appareil un contact galvanique entre la liaison électrique reliant les deux traversées de raccordement et la masse de l'appareil électrique lors de l'apparition d'un arc électrique. Une fois en contact, la liaison électrique et la masse de l'appareil retrouvent un potentiel identique.

À ce titre, l'invention a pour objet un procédé de protection d'un appareil électrique, notamment un transformateur électrique polyphasé, connecté en série à un réseau d'alimentation par l'intermédiaire, pour chaque phase de l'appareil électrique, de deux traversées reliées par une liaison électrique, ledit appareil électrique étant destiné à être immergé dans un liquide diélectrique contenu dans une cuve reliée à la terre, le procédé consistant à mettre en contact chaque liaison électrique avec la masse de l'appareil électrique dès l'apparition d'un arc électrique dans la cuve.

Selon l'invention la détection de l'arc électrique se fait lorsque la pression à l'intérieur de la cuve dépasse une première valeur seuil et que la vitesse de variation de la pression est supérieure à une deuxième valeur seuil.

De préférence, le procédé comporte en outre une fonction de protection et de déconnexion des phases de l'appareil, situées en aval des liaisons électriques.

L'invention concerne également un dispositif de protection contre les effets de défauts d'isolement dans un appareil électrique, notamment un transformateur électrique polyphasé, connecté en série à un réseau d'alimentation par l'intermédiaire, pour chaque phase de l'appareil électrique, de deux traversées reliées par une liaison électrique, ledit appareil électrique étant destiné à être immergé dans un liquide diélectrique contenu dans une cuve reliée à la terre, le dispositif de protection comprenant un moyen de détection d'un arc électrique, le moyen de détection étant couplé à des moyens de commande d'un système de connexion de la liaison électrique avec la masse de l'appareil électrique.

L'introduction de deux traversées permet de passer d'une connexion en dérivation à une connexion en série. Cette connexion en série facilite le raccordement de l'appareil électrique avec le réseau d'alimentation et rend possible l'extraction de l'appareil en cas de besoin.

Par ailleurs, l'utilisation d'un tel système de protection permet de protéger l'appareil électrique de défauts d'isolement lorsqu'il est soumis à des courants de fortes intensités.

De préférence, le système de connexion est un sectionneur triphasé.

Les appareils électriques et plus particulièrement les transformateurs possèdent généralement trois phases. L'utilisation d'un sectionneur triphasé permet donc de relier chaque phase de l'appareil directement avec la terre.

Selon un mode de réalisation préféré :
le moyen de détection active le système de connexion lorsque la pression relative à l'intérieur de la cuve dépasse une première valeur seuil, de préférence sensiblement égale à 0,4 bar.
le moyen de détection comprend une cellule étanche dont la compression provoque l'activation du système de connexion, et
le système de connexion comprend un élément de verrouillage en position d'un équipement mobile soumis à un ressort de rappel.

Il est à noter que l'apparition d'un arc électrique se traduit par une augmentation de la pression à l'intérieur de la cuve du fait de la décomposition par l'arc du liquide diélectrique et d'une formation importante de gaz.

Par ailleurs, l'utilisation d'une cellule étanche dont la compression, au-delà de la valeur seuil, déclenche le système de connexion permet d'affranchir le dispositif de protection de solution réalisant un échange avec l'extérieur. En effet, la cellule étanche se comprimant d'elle-même sous l'effet de la surpression, cette cellule ne nécessite pas d'énergie provenant de l'extérieur.

Cette réalisation permet également d'obtenir une bonne rapidité de réaction du dispositif, du fait de la simplicité de la chaîne cinématique et du faible délai de fermeture du sectionneur.

Enfin, la simplicité du dispositif dans son ensemble, limite l'impact économique sur le prix de l'appareil.
Selon un autre mode de réalisation :
le moyen de détection active le système de connexion lorsque la pression à l'intérieur de la cuve dépasse une première valeur seuil et que la vitesse de variation de la pression est supérieure à une deuxième valeur seuil,
le moyen de détection comprend un élément de verrouillage lié à une tête de piston inséré dans une chambre cylindrique dans laquelle est logée une cellule étanche ; la tête de piston possédant un orifice calibré qui assure une communication entre le bain de liquide diélectrique et l'intérieur de la chambre cylindrique, et
Le diamètre de l'orifice calibré est compris entre 0,5 à 1 mm de diamètre pour une chambre cylindrique de 100 cm3.

Ce second moyen de détection tient compte non seulement de la pression intérieure de la chambre cylindrique, mais également de la vitesse de variation de cette pression intérieure. Ainsi, lorsque l'appareil électrique est soumis à une augmentation de température due à des pertes d'énergie par effet Joule, la température augmente lentement et ne déclenche pas le système de connexion.

Par ailleurs, et de la même façon que précédemment, l'utilisation d'une cellule étanche déformable sous l'effet d'une surpression permet de s'affranchir de tout contact avec l'extérieur.

Selon un mode de réalisation particulier :
le dispositif de protection comporte en outre un moyen de protection et de déconnexion des phases de l'appareil électrique, situé en aval des liaisons électriques,
Le dispositif de protection intègre au moins un organe de manoeuvre situé sur la liaison électrique pour couper l'alimentation électrique de l'appareil et/ou créer une coupure du réseau d'alimentation, et un deuxième système de connexion activable par un deuxième moyen de détection, les deux systèmes de connexion étant situés de part et d'autre de l'organe de manoeuvre, et
les deux système de connexion sont également activables manuellement.

Ajouter à ce dispositif de protection une fonction de protection et de déconnexion des phases de l'appareil électrique, telle que présentée dans les documents ci-dessus référencés, permet d'assurer un niveau de sécurité et de performance optimal.

D'autre part, selon le type d'application de l'appareil électrique et la structure du réseau d'alimentation, il peut s'avérer nécessaire d'inclure des organes de manoeuvre dans la cuve du transformateur pour autoriser des manoeuvres d'exploitation sur le réseau.

C'est la raison pour laquelle il peut être intéressant d'ajouter un organe de manoeuvre au niveau de la liaison électrique reliant les deux traversées de raccordement de l'appareil.

Il devient alors également utile de permettre l'activation manuelle ou automatique, par le biais de moyens de détection, de deux systèmes de connexion situés de part et d'autre de l'organe de manoeuvre afin de faciliter les manoeuvres d'exploitation sur le réseau tout en protégeant l'appareil électrique contre les défauts d'isolement.

Enfin, l'invention concerne également un transformateur de distribution d'énergie électrique destiné à être immergé dans un liquide diélectrique contenu dans une cuve, le transformateur comportant un dispositif de protection contre les effets de défauts électriques tels que décrit précédemment.

D'autres caractéristiques et avantages de l'invention ressortiront à la lecture qui suit d'exemples de réalisation détaillés, en référence aux figures qui représentent respectivement :
- La figure 1, une représentation schématique unifilaire d'un transformateur conforme à l'art antérieur (déjà commentée) ;
- la figure 2, une représentation schématique unifilaire d'un transformateur comportant un premier exemple de réalisation d'un dispositif de protection selon l'invention ;
- la figure 3a, une vue de face simplifiée d'un premier mode de réalisation d'un moyen de détection et d'un système de connexion selon l'invention;
- la figure 3b, une vue de dessus simplifiée du premier mode de réalisation d'un moyen de détection et d'un système de connexion selon l'invention;
- la figure 4, une vue simplifiée d'un second mode de réalisation d'un moyen de détection et d'un système de connexion, partiellement représenté, selon l'invention ;
- la figure 5, une représentation schématique unifilaire d'un transformateur comportant un deuxième exemple de réalisation d'un dispositif de protection selon l'invention ;

Comme représenté schématiquement sur la figure 2, l'appareil électrique 10 à protéger est un transformateur électrique 10 immergé dans une cuve 12 contenant un liquide diélectrique. Par ailleurs, la cuve 12 est hermétiquement clause, ce qui permet de contrôler la pression à l'intérieur de la cuve 12.

Selon plusieurs variantes, le dispositif de protection s'applique à d'autres types d'appareils électriques que les transformateurs, notamment des réactances de compensation, des réactances shunt, des auto transformateurs, voir des organes de manoeuvre.

Le dispositif de protection selon l'invention est également équipé, pour chaque phase du réseau, de deux bornes de raccordement 13a et 13b branchées respectivement avec les cotés amont et aval du réseau électrique d'alimentation 14.

Avantageusement, ces bornes de raccordement 13a,13b sont des prises de courant moyenne tension embrochables, ce qui permet un tronçonnement aisé du réseau d'alimentation 14.

Le transformateur 10 est ainsi raccordé en série au réseau d'alimentation, ce qui est typique des réseaux de distribution publique.

Le dispositif de protection selon l'invention comporte, tel que le présentent les documents de l'art antérieur susmentionnés, un moyen de protection et de déconnexion 15 de la partie active 16 du transformateur 10.

Le moyen de protection et de déconnexion 15 permet de détecter un courant de défaut entre phases ou un courant circulant entre la terre 17 et la partie active 16 du transformateur. En cas de détection, cette fonction de protection et de détection provoque la déconnexion des phases alimentant le transformateur.

Le transformateur 10 comporte en outre pour chacune de ses phases deux traversées électriques 20a,20b connectées respectivement aux bornes de raccordement 13a, 13b. Ces traversées, pénétrant à l'intérieur de la cuve 12 du transformateur 10, sont reliées par une liaison électrique 22 polyphasée, également située dans la cuve du transformateur. Cette liaison électrique 22 polyphasée peut avantageusement être un jeu de barres conductrices.

Le dispositif de protection selon l'invention comporte enfin un moyen de détection 24 d'un arc électrique. Le moyen de détection commande un système de connexion 26 reliant, lorsqu'il est actionné, la liaison électrique 22 polyphasée avec la masse 17 du transformateur 10.

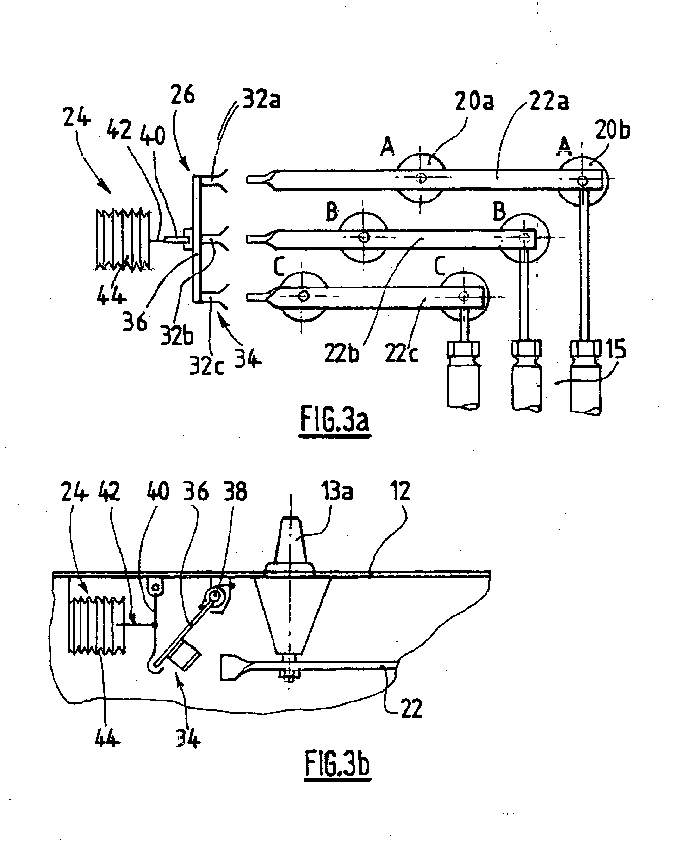

Les figure 3a et 3b représentent des vues partielles, de face et du dessus, d'un système de connexion 26 et d'un premier mode de détection 24 d'un arc électrique, selon l'invention.

Dans ce mode de réalisation, la liaison électrique 22 polyphasée est assurée par trois barres conductrices 22a,22b,22c qui relient des traversées électriques 20a,20b.

À une première extrémité de cette liaison électrique 22 polyphasée sont reliés les éléments de protection et de déconnexion 15 de la partie active 16 du transformateur électrique 10, ici partiellement représentés. À une seconde extrémité de cette liaison électrique 22 polyphasée sont reliés des contacts mobiles 32a,32b,32c disposés sur un équipage mobile 36 formant ainsi un sectionneur triphasé 34 de mise à la terre.

Les contacts mobiles 32a,32b,32c sont en vis-à-vis de la deuxième extrémité des barres conductrices 22a,22b,22c. L'équipage mobile 36 est fixé sur la cuve 12 du dispositif de protection selon l'invention. Néanmoins, l'équipage mobile 36 possède un degré de rotation par rapport à la cuve 12, afin de permettre la déconnexion des contacts mobiles 32a,32b,32c du sectionneur 34 et de l'extrémité des barres conductrices 22a,22b,22c qui sont en vis-à-vis.

Lorsqu'il est en position ouverte, l'équipage mobile 36 tend un ressort de torsion 38. L'équipage mobile 36 est alors maintenu en position ouverte par l'intermédiaire d'un élément de verrouillage 40, par exemple un crochet. Le système de verrouillage 40 est actionné par une biellette 42, elle-même solidaire de la face avant d'un moyen de détection 24 comprenant une cellule étanche 44 déformable sous l'effet d'une surpression dans la cuve 12.

Lors de l'apparition d'un arc électrique, celui-ci provoque une décomposition du diélectrique liquide et engendre un volume de gaz tel que la pression interne dans la cuve 12 contenant la cellule étanche 44 déformable évolue très rapidement. Lorsque la surpression dépasse une première valeur seuil, déterminée par les caractéristiques mécaniques de la cellule étanche 44, celle-ci se déforme, activant ainsi le système de connexion 26.

Avantageusement, la première valeur seuil d'activation du système de connexion 26 est sensiblement égale à 0,4 bar.

Lorsque la cellule étanche 44 se comprime, elle met en mouvement la biellette 42, et donc l'élément de verrouillage 40, ce qui a pour effet de libérer l'équipage mobile 36 et donc de mettre en contact les contacts mobiles 32a,32b,32c avec l'extrémité des barres conductrices 22a,22b,22c.

Bien entendu, le déplacement de l'équipage mobile 36 permettant la connexion/déconnexion des contacts mobiles 32a,32b,32c du sectionneur 34 avec l'extrémité des barres conductrices 22a,22b,22c pourrait être dû à un mouvement de translation.

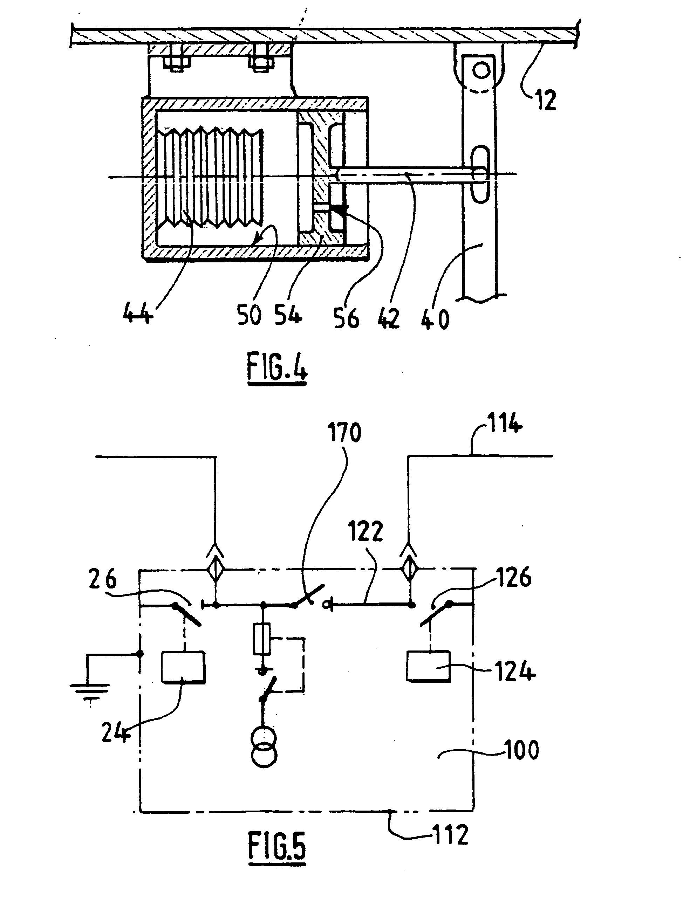

La figure 4 représente une vue partielle d'un second exemple de moyen de détection d'un arc électrique.

En effet, dans cet exemple, la cellule étanche 44 est disposée dans une chambre cylindrique 50, elle-même fixée au bâti de la cuve 12. La biellette 42 est ici solidaire d'une tête de piston 54, dont le diamètre est ajusté au diamètre intérieur de la chambre cylindrique 50, de façon à assurer une bonne étanchéité entre l'intérieur de la chambre cylindrique 50 et l'intérieur de la cuve 12.

La tête de piston 54 est munie d'un orifice 56 calibré garantissant la communication entre le liquide diélectrique contenu dans la cuve 12 et la chambre cylindrique 50. L'orifice 56 calibré permet ainsi de conserver un équilibre de pression entre la chambre cylindrique et l'intérieur de la cuve, tant qu'il n'y a pas de variation de pression brutale à l'intérieur de la cuve 12.

L'appareil électrique 10 génère parfois des pertes, notamment par effet Joule, ce qui provoque un échauffement du liquide diélectrique et donc une montée en pression dans la cuve 12. Néanmoins, cette montée en pression est lente. L'orifice 56 calibré permet alors de conserver un équilibre de pression entre l'intérieur de la chambre cylindrique 50 et l'intérieur cuve 12. Si cette pression dépasse la première valeur seuil, la cellule étanche 24 peut éventuellement se comprimer, mais la tête de piston 54 reste immobile et le dispositif de protection selon l'invention ne réagit pas.

En revanche lors de l'apparition d'un défaut électrique dans le transformateur, et notamment d'un arc électrique entre les différentes phases de la liaison électrique 22, ou entre la liaison 22 et la terre, le liquide diélectrique subit une montée en pression rapide à l'intérieur de la cuve 12. Cette montée en pression étant brutale, l'orifice calibré 56 ne permet pas de maintenir l'équilibre de pression entre l'intérieur de la cuve 12 et l'intérieur de la chambre cylindrique 50.
Avantageusement, ce moyen de détection est actionné lorsque la vitesse de variation de la pression est 0,2 bar par seconde au moins.

La tête de piston 54 est alors mue sous l'effet de la différence de pression qui apparaît entre l'intérieur de la cuve 12 et l'intérieur de la chambre cylindrique 50. Le déplacement de la tête du piston 54 est alors possible si la pression est supérieure à la première valeur seuil, par compressibilité de la cellule étanche 44.

Le mouvement de la tête du piston 54 est transmis à la biellette 42, puis à l'élément de verrouillage 40, ce qui a pour effet de libérer l'équipage mobile 36, de façon à mettre les contacts mobiles 32a,32b,32c en contact avec les extrémités des barres conductrices 22a,22b,22c.

La sensibilité et la réactivité de ce moyen de détection 24 dépendent essentiellement du calibrage de l'orifice 56. Cet orifice 56 doit être calibré pour éviter le déclenchement intempestif du dispositif de protection. Avantageusement, le diamètre de l'orifice 56 peut être de 0,5 à 1 mm de diamètre de l'orifice pour une chambre cylindrique de 100 cm³.

Selon un autre mode de réalisation représenté sur la figure 5, il peut s'avérer nécessaire d'inclure dans la cuve 112 du transformateur 110, un ou plusieurs organes de manoeuvres 170 permettant d'effectuer certains travaux sur le réseau d'alimentation 114.

L'organe de manoeuvres 170 est généralement un interrupteur ou un sectionneur, commandé manuellement ou à distance par une télécommande. Cet organe de manoeuvre 170 permet ainsi de couper le réseau d'alimentation 114.

Pour des besoins de consignation de l'amont ou l'aval du réseau d'alimentation 114, l'organe de manoeuvre 170 est généralement encadré par deux systèmes de connexion 26,126 de la liaison électrique 122 avec la terre.

Ces systèmes de connexion 26,126 peuvent être commandés soit par deux moyens de détection 24,124 tels que décrits précédemment, soit manuellement. Ainsi, ils peuvent alternativement remplir leur rôle dans le cadre du dispositif de protection ou bien servir de simple sectionneur de mise à la terre et en court-circuit.

Avantageusement l'activation manuelle de ces systèmes de connexion peut se faire à distance par le biais d'une télécommande.

## Revendications

1. Procédé de protection d'un appareil électrique (10,110), notamment un transformateur électrique polyphasé (10,110), connecté en série à un réseau d'alimentation (14,114) par l'intermédiaire, pour chaque phase de l'appareil électrique (10,110), de deux traversées (20a,20b) reliées par une liaison électrique (22,122), ledit appareil électrique (10,110) étant destiné à être immergé dans un liquide diélectrique contenu dans une cuve (12,112) reliée à ia terre, ledit procédé consistant à mettre en contact la liaison électrique (22,122) et la masse de l'appareil électrique (17) dès l'apparition d'un arc électrique dans la cuve (12,112), **caractérisé en ce que** la détection de l'arc électrique se fait lorsque la pression relative à l'intérieur de la cuve (12,112) dépasse une première valeur seuil et que la vitesse de variation de la pression est supérieure à une deuxième valeur seuil.

2. Procédé de protection d'un appareil électrique (10,110) selon l'une des revendications précédentes, **caractérisé en ce qu'**il comporte en outre une fonction de protection et de déconnexion (15) des phases de la partie active de l'appareil électrique (10,110) situées en aval de la liaison électrique (22,122).

3. Dispositif de protection contre les effets de défauts électriques dans un appareil électrique (10,110), notamment un transformateur électrique polyphasé (10,110), connecté en série à un réseau d'alimentation (14,114) par l'intermédiaire, pour chaque phase de l'appareil électrique (10,110), de deux traversées (20a,20b) reliées par une liaison électrique (22,122), ledit appareil électrique (10,110) étant destiné à être immergé dans un liquide diélectrique contenu dans une cuve (12,112) reliée à la terre, ledit dispositif de protection comprenant au moins un moyen de détection (24) d'un arc électrique, le moyen de détection (24) étant couplé à des moyens de commande d'un système de connexion (26) de la liaison électrique (22,122) avec la masse de l'appareil électrique (17), **caractérisé en ce que** le moyen de détection (24) active le système de connexion (26) lorsque la pression à l'intérieur de la cuve (12,112) dépasse une première valeur seuil et que la vitesse de variation de la pression est supérieure à une deuxième valeur seuil.

4. Dispositif de protection selon la revendication 3, **caractérisé en ce que** le système de connexion (26) est un sectionneur polyphasé.

5. Dispositif de protection selon la revendication 3 ou 4, **caractérisé en ce que** la première valeur seuil est sensiblement égale à 0,4 bar.

6. Dispositif de protection selon l'une quelconque des revendications 3 à 5, **caractérisé en ce que** le moyen de détection (24) comprend un élément de verrouillage (40) lié à une tête de piston (54) insérée dans une chambre cylindrique (50) dans laquelle est logée une cellule étanche (44), la tête de piston (54) possédant un orifice calibré (56) assurant une communication entre le bain de liquide diélectrique et l'intérieur de la chambre cylindrique (50).

7. Dispositif de protection selon la revendication 6, **caractérisé en ce que** le diamètre de l'orifice calibré (56) est compris entre 0,5 et 1 mm pour une chambre cylindrique (50) de 100 cm³.

8. Dispositif de protection selon l'une des revendications 3 à 7 **caractérisé en ce qu'**il comporte en outre un moyen de protection et de déconnexion (15) des phases de la partie active de l'appareil électrique (10,110) situées en aval de la liaison électrique (22,122).

9. Dispositif de protection selon l'une des revendications 3 à 8 **caractérisé en ce qu'**il intègre au moins un organe de manoeuvre (170) situé sur la liaison électrique (122) pour couper l'alimentation (114) de l'appareil électrique (110) et/ou créer une coupure du réseau d'alimentation (114), ainsi qu'un deuxième système de connexion (126) activable par un deuxième moyen de détection (124), les deux systèmes de connexion (26,126) étant situés de part et d'autre de l'organe de manoeuvre (170).

10. Dispositif de protection selon la revendication 9 **caractérisé en ce que** les deux systèmes de connexion sont également activables manuellement.

11. Transformateur (10,110) de distribution d'énergie électrique destiné à être immergé dans un liquide diélectrique contenu dans une cuve (12,112), le transformateur (10,110) comportant un dispositif de protection contre les effets de défauts électriques selon l'une des revendications 3 à 10.

## Patentansprüche

1. Schutzverfahren eines Elektrogeräts (10, 110), insbesondere eines mehrphasigen elektrischen Transformators (10, 110), der in Serie an ein Versorgungsnetz (14, 114) über, für jede Phase des Elektrogeräts (10, 110), zwei Durchführungen (20a, 20b) angeschlossen ist, die durch eine elektrische Verbindung (22, 122) miteinander verbunden sind, wobei das Elektrogerät (10, 110) ausgelegt ist, um in eine dielektrische Flüssigkeit eingetaucht zu werden, die in einem Gefäß (12, 112) enthalten ist, das mit der Erde verbunden ist, wobei das Verfahren darin besteht, die elektrische Verbindung (22, 122) und die Masse des Elektrogeräts (17) beim Auftreten eines Lichtbogens im Behälter (12, 112) in Kontakt zu bringen, **dadurch gekennzeichnet, dass** der Nachweis des Lichtbogens erfolgt, wenn der relative Druck im Innern des Behälters (12, 112) einen ersten Schwellenwert übersteigt, und wenn die Geschwindigkeit der Druckveränderung höher als ein zweiter Schwellenwert ist.

2. Schutzverfahren eines Elektrogeräts (10, 110) nach einem der vorhergehenden Ansprüche, **dadurch gekennzeichnet, dass** es außerdem eine Funktion zum Schutz und zur Unterbrechung (15) der Phasen des aktiven Teils des Elektrogeräts (10, 110) umfasst, die sich nachgeordnet von der elektrischen Verbindung (22, 122) befinden.

3. Schutzvorrichtung gegen die Effekte von elektrischen Fehlern in einem Elektrogerät (10, 110), insbesondere eines mehrphasigen elektrischen Transformators (10, 110), der in Serie an ein Stromnetz (14,114) über, für jede Phase des Elektrogeräts (10, 110), zwei Durchführungen (20a, 20b) angeschlossen ist, die durch eine elektrische Verbindung (22, 122) miteinander verbunden sind, wobei das Elektrogerät (10, 110) ausgelegt ist, um in eine dielektrische Flüssigkeit eingetaucht zu werden, die in einem Gefäß (12, 112) enthalten ist, das mit der Erde verbunden ist, wobei die Schutzvorrichtung mindestens ein Nachweismittel (24) eines Lichtbogens umfasst, wobei das Nachweismittel (24) mit Steuermitteln eines Anschlusssystems (26) der elektrischen Verbindung (22,122) an die Masse des Elektrogeräts (17) gekoppelt ist, **dadurch gekennzeichnet, dass** das Nachweismittel (24) das Anschlusssystem (26) aktiviert, wenn der Druck im Innern des Behälters (12, 112) einen ersten Schwellenwert übersteigt, und wenn die Geschwindigkeit der Druckveränderung höher als ein zweiter Schwellenwert ist.

4. Schutzvorrichtung nach Anspruch 3, **dadurch gekennzeichnet, dass** das Anschlusssystem (26) ein mehrphasiger Trennschalter ist.

5. Schutzvorrichtung nach Anspruch 3 oder 4, **dadurch gekennzeichnet, dass** der erste Schwellenwert im Wesentlichen gleich 0,4 bar ist.

6. Schutzvorrichtung nach einem der Ansprüche 3 bis 5, **dadurch gekennzeichnet, dass** das Nachweismittel (24) ein Verriegelungsmittel (40) umfasst, das mit einem Kolbenkopf (54) verbunden ist, der in eine zylindrische Kammer (50) eingeführt ist, in der eine dichte Zelle (44) aufgenommen ist, wobei der Kolbenkopf (54) eine kalibrierte Öffnung (56) aufweist, die eine Verbindung zwischen dem dielektrischen Flüssigkeitsbad und dem Inneren der zylindrischen Kammer (50) sicherstellt.

7. Schutzvorrichtung nach Anspruch 6, **dadurch gekennzeichnet, dass** der Durchmesser der kalibrierten Öffnung (56) zwischen 0,5 und 1 mm bei einer zylindrischen Kammer (50) von 100 cm³ liegt.

8. Schutzvorrichtung nach einem der Ansprüche 3 bis 7, **dadurch gekennzeichnet, dass** sie außerdem ein Mittel zum Schutz und zur Unterbrechung (15) der Phasen des aktiven Teils des Elektrogeräts (10, 110) umfasst, die sich nachgeordnet von der elektrischen Verbindung (22, 122) befinden.

9. Schutzvorrichtung nach einem der Ansprüche 3 bis 8, **dadurch gekennzeichnet, dass** sie mindestens ein Betätigungsorgan (170) umfasst, das sich auf der elektrischen Verbindung (122) befindet, um den Strom (114) des Elektrogeräts (110) zu unterbrechen und/oder eine Unterbrechung des Versorgungsnetzes (114) zu verursachen, ebenso wie eine zweites Anschlusssystem (126), das durch ein zweites Nachweismittel (124) aktiviert werden kann, wobei sich die zwei Anschlusssysteme (26, 126) auf beiden Seiten des Betätigungsorgans (170) befinden.

10. Schutzvorrichtung nach Anspruch 9, **dadurch gekennzeichnet, dass** die zwei Anschlusssysteme ebenfalls manuell aktiviert werden können.

11. Transformator (10, 110) zur Verteilung von elektrischer Energie, der ausgelegt ist, um in eine dielektrische Flüssigkeit eingetaucht zu werden, die in einem Behälter (12, 112) enthalten ist, wobei der Transformator (10, 110) eine Schutzvorrichtung gegen die Effekte von elektrischen Fehlern nach einem der Ansprüche 3 bis 10 umfasst.

## Claims

1. Method of protecting an electrical appliance (10, 110), in particular a polyphase electrical transformer (10, 110), connected in series to a power network (14, 114) by the intermediary, for each phase of the electrical appliance (10, 110), of two bushings (20a, 20b) connected by an electrical connection (22, 122), said electrical appliance (10, 110) being intended to be immersed in a dielectric liquid contained in a tank (12, 112) connected to the ground, said method consisting in putting into contact the electrical connection (22, 122) and the ground of the electrical appliance (17) when an electric arc appears in the tank (12, 112), **characterised in that** the detection of the electric arc is done when the relative pressure inside the tank (12, 112) is higher than a first threshold value and the rate of pressure change is higher than a second threshold value.

2. Method of protecting an electrical appliance (10, 110) according to one of the preceding claims, **characterised in that** it further comprises a function of protecting and of disconnecting (15) the phases of the active portion of the electrical appliance (10, 110) located downstream of the electrical connection (22, 122).

3. Device for protecting against the effects of electrical faults in an electrical appliance (10, 110), in particular a polyphase electrical transformer (10, 110), connected in series to a power network (14, 114) by the intermediary, for each phase of the electrical appliance (10, 110), of two bushings (20a, 20b) connected by an electrical connection (22, 122), said electrical appliance (10, 110) being intended to be immersed in a dielectric liquid contained in a tank (12, 112) connected to the ground, said device for protecting comprising at least one means for detecting (24) an electric arc, the means for detecting (24) being coupled to means for controlling a connection system (26) of the electrical connection (22, 122) with the ground of the electrical appliance (17), **characterised in that** the means for detecting (24) activate the connection system (26) when the pressure inside the tank (12, 112) is higher than a first threshold value and the rate of pressure change is higher than a second threshold value.

4. Device for protecting according to claim 3, **characterised in that** the connection system (26) is a polyphase isolator switch.

5. Device for protecting according to claim 3 or 4, **characterised in that** the first threshold value is substantially equal to 0.4 bar.

6. Device for protecting according to any one of claims 3 to 5, **characterised in that** the means for detecting (24) comprise a locking element (40) linked to a piston head (54) inserted into a cylindrical chamber (50) wherein is housed a sealed cell (44), the piston head (54) having a calibrated orifice (56) that provides communication between the dielectric liquid bath and the inside of the cylindrical chamber (50).

7. Device for protecting according to claim 6, **characterised in that** the diameter of the calibrated orifice (56) is between 0.5 and 1 mm for a cylindrical chamber (50) of 100 cm³

8. Device for protecting according to one of claims 3 to 7 **characterised in that** it further comprises a means of protecting and of disconnecting (15) the phases of the active portion of the electrical appliance (10, 110) located downstream of the electrical connection (22, 122).

9. Device for protecting according to one of claims 3 to 8 **characterised in that** it integrates at least one apparatus for manoeuvring (170) located on the electrical connection (122) in order to cut off the power (114) of the electrical appliance (110) and/or to create a cut-off of the power network (114), as well as a second connection system (126) that can be activated by a second means for detecting (124), the two connection systems (26, 126) being located on either side of the apparatus for manoeuvring (170).

10. Device for protecting according to claim 9 **characterised in that** the two connection systems can also be activated manually.

11. Distribution transformer (10, 110) of electrical energy intended to be immersed in a dielectric liquid contained in a tank (12, 112), the transformer (10, 110) comprising a device for protecting against the effects of electrical faults according to one of claims 3 to 10.
